# EUROPEAN PATENT APPLICATION

(11) **EP 2 312 859 A2**
(43) Date of publication of application: **20.04.2011**
(21) Application number: 10013478.2
(22) Date of filing: 08.10.2010
(51) Int. Cl.: H04N 13/00

(54) **Method and system for communicating 3D video via a wireless communication link**

(30) Priority: 13.10.2009 US 578048
(71) Applicant: Broadcom Corporation, Irvine, CA 92617 (US)
(72) Inventor: Chen, Xuemin, 92067 Rancho Santa Fé (US); Hulyalkar, Samir, 1894 Newton, PA (US); Kellerman, Marcus, 92172 San Diego, CA (US); Klebanov, Ilya, L3T 3C9 Thornill (CA)
(74) Representative: Jehle, Volker Armin

(57) **Abstract**

A first video processing device, for example, a set-top-box, receives and decodes left and right video streams and generates left and right graphics streams. The left and right video streams and left and right graphics streams are compressed and wirelessly communicated to a second video processing device, for example, a 3D and/or 2D television. The graphics streams are generated by a graphics processor on the first video processing device utilizing stored and/or received graphics information. The second video processing device wirelessly receives and decompresses the video and graphics. Blending of the left video with graphics and/or blending the right video with graphics may be done prior to wireless communication by the first video processing device or after wireless reception by the second video processing device. The second video processing device displays the blended left video and graphics and/or the blended right video and graphics.

## Description

### CROSS-REFERENCE TO RELATED APPLICATIONS/INCORPORATION BY REFERENCE

Not applicable

### FIELD OF THE INVENTION

Certain embodiments of the invention relate to communication systems. More specifically, certain embodiments of the invention relate to communicating 3D video via a wireless communication link.

### BACKGROUND OF THE INVENTION

Digital video capabilities may be incorporated into a wide range of devices such as, for example, digital televisions, digital direct broadcast systems, digital recording devices, gaming consoles and the like. Digital video devices may provide significant improvements over conventional analog video systems in processing and transmitting video sequences with increased bandwidth efficiency.

Video content may be recorded in two-dimensional (2D) format or in three-dimensional (3D) format. In various applications such as, for example, the DVD movies and the digital TV, a 3D video is often desirable because it is often more realistic to viewers than the 2D counterpart. A 3D video comprises a left view video and a right view video. A 3D video frame may be produced by combining left view video components and right view video components.

Further limitations and disadvantages of conventional and traditional approaches will become apparent to one of skill in the art, through comparison of such systems with the present invention as set forth in the remainder of the present application with reference to the drawings.

### BRIEF SUMMARY OF THE INVENTION

A system and/or method for communicating 3D video via a wireless communication link, as set forth more completely in the claims.
According to an aspect, a method for processing video is provided, the method comprising:
performing by one or more processors and/or circuits in a first video processing device:
   decoding 3D video comprising a left video stream and a right video stream; and
   wirelessly communicating said left video stream, said right video stream, a left graphics stream and a right graphic stream via a first wireless interface of said first video processing device.
Advantageously, said first video processing device comprises one or more of a set-top-box and a computer.
Advantageously, the method further comprises blending said right video stream with said right graphic stream and/or blending said left video stream with said left graphic stream prior to said wireless communication.
Advantageously, the method further comprises compressing said left video stream, said right video stream, said left graphics stream and said right graphics stream prior to said wirelessly communicating.
Advantageously, said wirelessly communicated left compressed video stream, said right compressed video stream, said left compressed graphics stream and said right compressed graphics stream are received by a corresponding second wireless interface of a second video processing device, and said second video processing device comprises a 3D and/or 2D video display device.
Advantageously, the method further comprises generating said left graphics stream and said right graphics stream utilizing left and right graphics information that is stored in said first video processing device and/or received by said first video processing device.
Advantageously, the method further comprises generating by a graphics processor within said first video processing device, graphics objects for said left graphics stream and said right graphics streams.
Advantageously, the method further comprises compressing said left video stream, said right video stream, said left graphics stream, said right graphics stream, a blended said left video stream with said left graphics stream and/or a blended right video stream with said right graphics stream utilizing lossless, visual lossless and/or lossy horizontal compression.
Advantageously, a second video processing device decompresses a compressed said left video stream, a compressed said right video stream, a compressed said left graphics stream, a compressed said right graphics stream, a compressed blended said left video stream with said left graphics stream and/or a compressed blended right video stream with said right graphics and said second video processing device comprises a 3D and/or 2D video display device.
Advantageously, said second video processing device blends said decompressed said left video stream with said decompressed said left graphics stream and/or blends said decompressed said right video stream with said decompressed said right graphics stream.
Advantageously, said second video processing device displays blended said left video stream with said left graphics stream and blended said right video stream with said right graphics stream.
Advantageously, said left video stream, said right video stream, said left graphics stream and said right graphic stream comprise uncompressed data.
According to an aspect, a system for processing video comprises:
   one or more processors and/or circuits in a first video processing device, wherein said one or more processors and/or circuits are operable to:
      decode 3D video comprising a left video stream and a right video stream; and
      wirelessly communicate said left video stream, said right video stream, a left graphics stream and a right graphic stream via a first wireless interface of said first video processing device.
Advantageously, said first video processing device comprises one or more of a set-top-box and a computer.
Advantageously, said one or more processors and/or circuits are operable to blend said right video stream with said right graphic stream and/or blend said left video stream with said left graphic stream prior to said wireless communication.
Advantageously, said one or more processors and/or circuits are operable to compress said left video stream, said right video stream, said left graphics stream and said right graphics stream prior to said wirelessly communicating.
Advantageously, said wirelessly communicated left compressed video stream, said right compressed video stream, said left compressed graphics stream and said right compressed graphics stream are received by a corresponding second wireless interface of a second video processing device, and said second video processing device comprises a 3D and/or 2D video display device.
Advantageously, said one or more processors and/or circuits are operable to generate said left graphics stream and said right graphics stream utilizing left and right graphics information that is stored in said first video processing device and/or received by said first video processing device.
Advantageously, said one or more processors and/or circuits are operable to generate by a graphics processor within said first video processing device, graphics objects for said left graphics stream and said right graphics streams.
Advantageously, said one or more processors and/or circuits are operable to compress said left video stream, said right video stream, said left graphics stream, said right graphics stream, a blended said left video stream with said left graphics stream and/or a blended right video stream with said right graphics stream utilizing lossless, visual lossless and/or lossy horizontal compression.
Advantageously, a second video processing device decompresses a compressed said left video stream, a compressed said right video stream, a compressed said left graphics stream, a compressed said right graphics stream, a compressed blended said left video stream with said left graphics stream and/or a compressed blended right video stream with said right graphics and said second video processing device comprises a 3D and/or 2D video display device.
Advantageously, said second video processing device blends said decompressed said left video stream with said decompressed said left graphics stream and/or blends said decompressed said right video stream with said decompressed said right graphics stream.
Advantageously, said second video processing device displays blended said left video stream with said left graphics stream and blended said right video stream with said right graphics stream.
Advantageously, said left video stream, said right video stream, said left graphics stream and said right graphic stream comprise uncompressed data.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram of an exemplary video coding system that is operable to communicate 3D video and graphics via a wireless link, in accordance with an embodiment of the invention.

FIG. 2 is a block diagram that illustrates an exemplary video reception unit that may be operable to wirelessly transmit left and right 3D video and graphics streams to a video display unit, in accordance with an embodiment of the invention.

FIG. 3A is a block diagram that illustrates an exemplary video reception unit that may be operable to wirelessly transmit left and/or right 3D video streams and left and/or right graphics streams to a video display unit, in accordance with an embodiment of the invention.

FIG. 3B is a block diagram that illustrates an exemplary display device that may be operable to wirelessly receive compressed left and right 3D video streams and process left and right graphics streams from a video reception unit, in accordance with an embodiment of the invention.

FIG. 4A is a flow chart illustrating exemplary steps for performing wireless transmission of 3D video and 3D graphics from a video reception unit to a video display device, in accordance with an embodiment of the invention.

FIG. 4B is a flow chart illustrating exemplary steps for wireless reception by a video display device of 3D video and 3D graphics from a video reception unit, in accordance with an embodiment of the invention.

### DETAILED DESCRIPTION OF THE INVENTION

Certain embodiments of the invention can be found in a method and system for communicating 3D video via a wireless communication link. In various embodiments of the invention, one or more processors and/or circuits in a first video processing device may be operable to receive and/or decode left and right video streams. The left video stream, the right video stream, a left graphics stream and a right graphics stream may be communicated wirelessly to a second video processing device. In this regard, the first video processing device may comprise one or more of a set-top-box and a computer, for example. The second video processing device may comprise a 3D and/or 2D video display device, such as a television, for example. In various embodiments of the invention, prior to the wireless communication, the right video stream may be blended with the right graphic stream and/or the left video stream may be blended with the left graphic stream. The left video stream, the right video stream, the left graphics stream and the right graphics stream may be compressed prior to the wireless communication. In this regard, the left compressed video stream, the right compressed video stream, the left compressed graphics stream and the right compressed graphics stream may be communicated via a first wireless interface of the first video processing device and may be received by a corresponding second wireless interface of a second video processing device which may comprise a 3D and/or 2D video display device. The left graphics stream and the right graphics stream may be generated utilizing left and right graphics information. The left and right graphics information may be stored in the first video processing device and/or may be received by the first video processing device.

A graphics processor within the first video processing device may generate graphics objects for the left graphics stream and the right graphics streams. In various embodiments of the invention, the left video stream, the right video stream, the left graphics stream, the right graphics stream, a blended left video stream with the left graphics stream and/or a blended right video stream with the right graphics stream may be compressed utilizing lossless, visual lossless and/or lossy horizontal compression. The second video processing device may decompress the compressed the left video stream, the compressed the right video stream, the compressed the left graphics stream, the compressed the right graphics stream, the compressed blended left video stream with the left graphics stream and/or the compressed blended right video stream with the right graphics stream. The second video processing device may comprise a 3D and/or 2D video display. Furthermore, the second video processing device may blend the decompressed left video stream with the decompressed left graphics stream and/or may blend the decompressed right video stream with the decompressed right graphics stream. The second video processing device may display a blended left video stream with left graphics stream and a blended right video stream with right graphics stream. The left video stream, the right video stream, the left graphics stream and/or the right graphic stream may comprise uncompressed data.

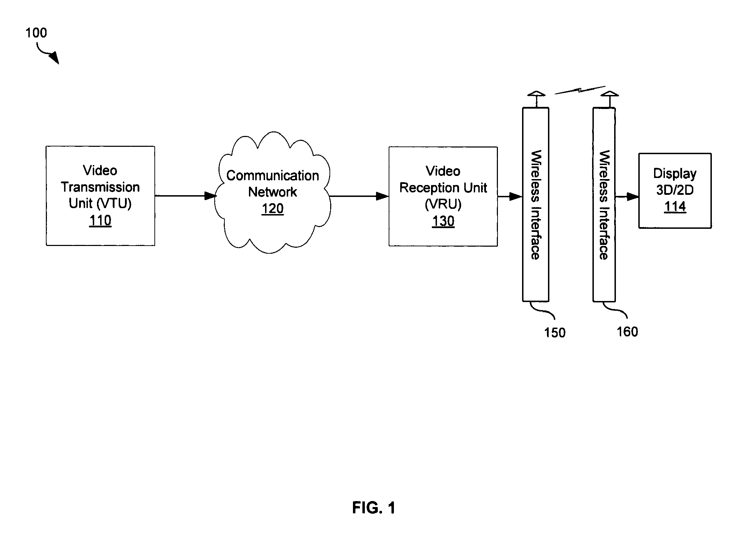

FIG. 1 is a block diagram of an exemplary video coding system that is operable to communicate 3D video and graphics via a wireless link, in accordance with an embodiment of the invention. Referring to FIG. 1, there is shown a video transmission unit (VTU) 110, a communication network 120, and a video reception unit (VRU) 130, wireless interfaces 150 and 160 and a video display device 114.

The VTU 110 may comprise suitable logic, circuitry, interfaces and/or code that may be operable to provide coded video content to the VRU 130. The VTU 110 may be operable to encode 3D video. For example, the VTU 110 may be operable to encode the 3D video as a left view video stream and a right view video stream, which may be referred to as the left video stream and the right video steam. The left video stream and/or the right video stream may be transmitted via different channels to the VRU 130. The left and/or right video streams may comprise 3D video content and/or may comprise 2D and/or 3D graphics information. Examples of the VTU 110 may comprise a cable television head-end, a direct broadcast satellite head-end and a web server.

The communication network 120 may comprise suitable logic, circuitry, interfaces and/or code that may be operable to provide platforms for communication between the VTU 110 and the VRU 130. The communication network 120 may be implemented as a wired or wireless communication network. The communication network 120 may be a local area network, a wide area network, the Internet, and the like.

The VRU 130 may comprise suitable logic, circuitry, interfaces and/or code that may be operable to receive a transport stream from the VTU 110 over the communication network 120. The received transport stream may comprise coded 3D video streams of entertainment programs such as, for example, a 3D TV program and/or 3D graphics information. In this regard, the VRU 130 may be operable to demultiplex or parse the received transport stream, for example, the left and right coded 3D video streams that may comprise the 3D TV program and may extract and/or store the left and right video streams in a memory or a local storage of the VRU 130. The VRU 130 may be operable to decode the extracted coded 3D video streams of the 3D TV program. Graphics information may be overlaid with the left and right views of the associated 3D TV program or may be viewed based on user input, for example. The graphics information may be stored in the VRU 130 and/or may be received by the VRU 130, for example, via video streams. Left and/or right graphics information may be processed locally to produce left and right graphics objects or graphic frames.

The left and right video streams may be compressed and the left and right graphics objects may be compressed, for example, utilizing a horizontal compression technique. The compressed left and right video streams and left and right streams comprising the graphic objects may be communicated via wireless transmission from the wireless interface 150 of the VRU 130 to the wireless interface 160 of the video display device 114. In the video display device 114, the left and left and right video streams and the left and right graphic streams may be decompressed. Furthermore, the left video stream may be blended with the left graphics stream and the right video stream may be blended with the right graphics stream. The video display device 114 may be operable to display the 3D video that is blended with 3D graphics and/or may be operable to convert the resulting compound 3D video and graphics into a 2D video for display. An exemplary VRU 130 may comprise a set-top box and/or a personal computer. An exemplary video display device 114 may comprise a 3D and/or 2D television.

The wireless interface 150 may comprise suitable logic, circuitry, interfaces, and/or code that is operable to wirelessly communicate 3D, left and/or right, video and/or graphics streams to the wireless interface 160 in the video display device 114. In this regard, the wireless interface 150 may be operable to utilize any suitable wireless technology. For example, the wireless interface 150 may comprise one or more of a 60 GHz wireless interface, a wireless local area network (WLAN) interface and/or a wireless personal area network (WPAN) interface.

In instances when the wireless interface 150 comprises a 60 GHz wireless interface, the 60 GHz wireless interface 150 is operable to communicate 3D, left and/or right, video and/or graphics streams to the wireless interface 160 in the video display device 114. For example, local file transfers, 3D and/or 2D video and/or 3D and/or 2D graphics connections and/or high speed 3D and/or 2D video single or multi-user gaming may be supported. The 60 GHz wireless interface 150 may comprise a physical layer interface or a physical layer interface and a medium access control (MAC) layer. The 60 GHz signals may be transmitted short distances, point to point and/or in a highly directional radiating pattern, for example. A wireless interface 150 60 GHz physical interface may support ultra wide band (UWB) technology or other wireless technologies.

In instances when the wireless interface 150 comprises a wireless local area network (WLAN), the wireless interface 150 is operable to communicate 3D, left and/or right, video and/or graphics streams to the wireless interface 160 in the video display device 114. In this regard, the WLAN wireless interface 150 may be operable to support an IEEE 802.11 physical layer (PHY) or a PHY and a media access control (MAC) layer. In addition, the WLAN wireless interface 150 may operate on a lower portion of spectrum, for example, near 2.4 GHz and/or 5 GHz, for example. The WLAN wireless interface 150 may perform local file transfers, 3D and/or 2D video and/or 3D and/or 2D graphics communications and/or high speed 3D and/or 2D video single or multi-user gaming.

In instances when the wireless interface 150 comprises a wireless personal area network (WPAN), the wireless interface 150 is operable to communicate 3D, left and/or right, video and/or graphics streams to the wireless interface 160 in the video display device 114. The WPAN wireless interface 150 may comprise for example, a Bluetooth transceiver comprising a physical layer interface or a physical layer interface and a medium access control (MAC) layer. The WPAN wireless interface 150 may support operations in the 2.4 GHz and/or 5 GHz frequency bands, for example, or may operate in other available spectrum.

The present invention is not limited to any specific wireless technology in the wireless interface 150. Various exemplary embodiments of the invention may utilize a variety of suitable wireless technologies. For example, 3GPP, 3GPP2, WIMAX, WiFi, LTE, WLAN, Bluetooth, 60 GHz, Zigbee as well as other wireless technologies may be supported by the wireless interface 150.

The wireless interface 160 may comprise suitable logic, circuitry interfaces, and/or code that is operable to wirelessly receive 3D, left and/or right, video and/or graphics streams from the wireless interface 150 in the VRU 130. In this regard, the wireless interface 160 may be operable to utilize any suitable wireless technology. For example, the wireless interface 160 may comprise one or more of a 60 GHz wireless interface, a wireless local area network (WLAN) interface and/or a wireless personal area network (WPAN) interface.

In instances when the wireless interface 160 comprises a 60 GHz wireless interface, the 60 GHz wireless interface 160 is operable to receive 3D, left and/or right, video and/or graphics streams from the wireless interface 150 in the VRU 130. For example, local file transfers, 3D and/or 2D video and/or 3D and/or 2D graphics connections and/or high speed 3D and/or 2D video single or multi-user gaming may be supported. The 60 GHz wireless interface 160 may comprise a physical layer interface or a physical layer interface and a medium access control (MAC) layer. The 60 GHz signals may be received over short distances, point to point and/or in a highly directional radiating pattern, for example. A wireless interface 160, 60 GHz physical interface may support ultra wide band (UWB) technology or other wireless technologies.

In instances when the wireless interface 160 comprises a wireless local area network (WLAN), the wireless interface 160 is operable to receive 3D, left and/or right, video and/or graphics streams from the wireless interface 150 in the VRU 130. In this regard, the WLAN wireless interface 160 may be operable to support an IEEE 802.11 physical layer (PHY) or a PHY and a media access control (MAC) layer. In addition, the WLAN wireless interface 160 may operate on a lower portion of spectrum, for example, near 2.4 GHz and/or 5 GHz, for example. The WLAN wireless interface 160 may perform local file transfers, 3D and/or 2D video and/or 3D and/or 2D graphics communications and/or high speed 3D and/or 2D video single or multi-user gaming.

In instances when the wireless interface 160 comprises a wireless personal area network (WPAN), the wireless interface 160 is operable to receive 3D, left and/or right, video and/or graphics streams from the wireless interface 150 in the VRU 130. The WPAN wireless interface 160 may comprise for example, a Bluetooth transceiver comprising a physical layer interface or a physical layer interface and a medium access control (MAC) layer. The WPAN wireless interface 160 may support operations in the 2.4 GHz and/or 5 GHz frequency bands, for example, or may operate in other available spectrum.

The present invention is not limited to any specific wireless technology in the wireless interface 160. Various exemplary embodiments of the invention may utilize a variety of suitable wireless technologies. For example, 3GPP, 3GPP2, WIMAX, WiFi, LTE, WLAN, Bluetooth, 60 GHz, Zigbee as well as other wireless technologies may be supported by the wireless interface 160.

The video display device 114 may comprise suitable logic, circuitry interfaces, and/or code that is operable to receive 3D, left view and/or right view, video and/or graphics, via wireless communication and to display the 3D video and/or graphics. In addition, the video display device 114 may be operable to decompress the received left view and/or the right view, video and/or graphics streams. The video display device 114 may be operable to blend the left graphics data with the left video data and may be operable to blend the right graphics data with the right video data. The video display device 114 may be operable to display the 3D blended left view video and/or graphics and the blended right view video and/or graphics based on one or more of a plurality of display technologies. For example, the video display device 114 may utilize polarizing display techniques with for example, a polarizing liquid crystal display (LCD). In another exemplary embodiment of the invention, the video display device 114 may utilize time sequential display techniques with a DLN rear projector display or a high frame rate plasma display. Moreover, the video display device 114 may be operable to utilize one or more of spectral filter techniques, anaglyph techniques and/or Pulfrich techniques. The present invention is not limited to any specific display technology and may utilize any suitable 3D video and/or graphics display technology.

In operation, the VTU 110 may be operable to encode 3D video content, for example, a 3D TV program into a left view video stream and a right view video stream. A multiplexed transport stream may be communicated to the VRU 130 over the communication network 120. The VRU 130 may be operable to demultiplex the received transport stream into coded 3D video streams of the 3D TV program and may be operable to extract left and/or right graphics information. The VRU 130 may be operable to decode the coded left and right 3D video streams of the 3D TV program. Depending on device configuration and/or user input, for example, left and right 3D graphics may be presented during the 3D TV program. The VRU 130 may be operable to locally process the left and right graphics to produce left and right graphic objects which may be referred to as left and right graphic streams. The VRU 130 may be operable to compress the left and right video streams and the left and right graphics streams utilizing horizontal compression techniques, for example. The VRU 130 may transmit the compressed left and right video streams and the compressed left and right graphics streams via the wireless interface 150 to the wireless interface 160 in the video display device 114. The video display device 114 may be operable to decompress the left and right video streams and the left and right graphics streams and may overlay, blend and/or replace decoded left 3D video stream data with the corresponding left graphic objects the and the right graphic objects. The resulting compound 3D video may be displayed by the video display device 114 as 3D video or may be converted into a 2D video for display.

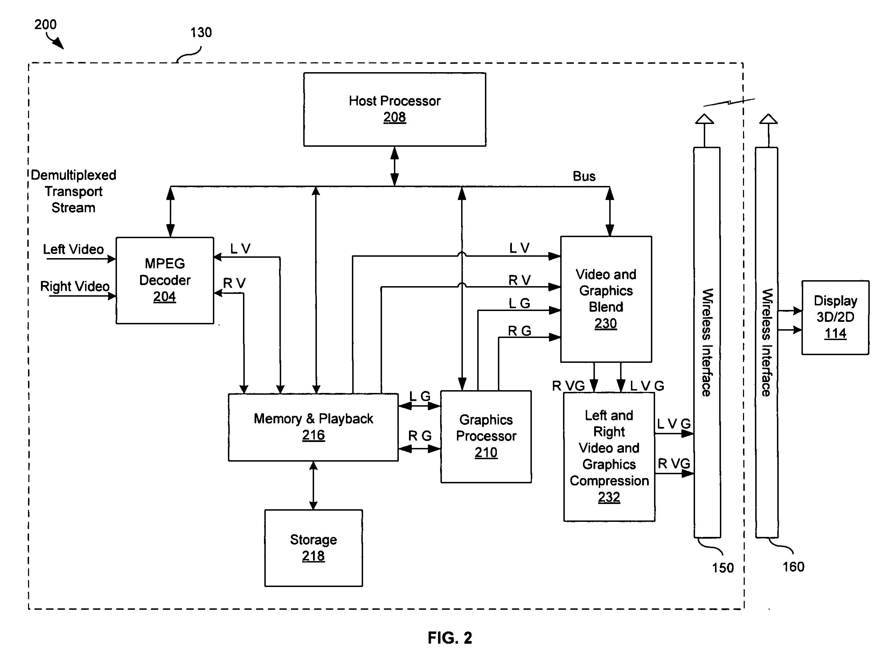

FIG. 2 is a block diagram that illustrates an exemplary video reception unit that may be operable to wirelessly transmit left and right 3D video and graphics streams to a video display unit, in accordance with an embodiment of the invention. Referring to FIG. 2, there is shown a video processing system 200 comprising the VRU 130 that may comprise a host processor 208, an decoder 204, a memory and playback module 216, a local storage 218, a graphics processor 210, video and graphics blending module 230, a left and right video and graphics compression module 232 and the wireless interfaces 150. In addition, there is shown the wireless interface 160 and the video display device 114.

The host processor 208 may comprise suitable logic, circuitry, interfaces and/or code that may be operable to control operations of various units within the VRU 130, for example, the decoder 204, the graphics processor 210, the video and graphics blending module 230 and/or the compression module 220. The host processor 208 may support various applications, for example, 3D video streaming on the VRU 130. The host processor 208 may be operable to communicate with the memory and playback 216 and/or the local storage 218. The host processor 208 may be operable to generate left and/or right graphics information for graphics that may overlay, be blended with and/or replace the received left and/or right 3D video steam data, for example. Exemplary graphics may comprise a user interface, for example, a user guide and/or a menu or may comprise 3D graphics to overlay 3D video data, for example. The left and/or right graphics information may be communicated to the memory and playback module 216 and/or to the graphics processor 210 for processing the graphics and for generating left and/or right graphics objects which may be referred to as left and right graphics streams. In this regard, the host processor 208 may be configured to select graphics for display in the 3D TV program.

The decoder 204 may comprise suitable logic, circuitry, interfaces and/or code that may be operable to decode a received left view video from the VTU 110 frame by frame. The decoder 204 may be operable to utilize various video decompression algorithms such as specified in MPEG-2, MPEG-4, AVC, VC1, VP6, H.264 and/or other video formats to form decompressed or decoded video content for the received left view video from the VTU 110. Information such as the scene information from left view decoding may be communicated to be used for right view decoding, for example. In addition, the decoder 204 may be operable to decode right view video from the VTU 110 frame by frame. The decoder 204 may be operable to utilize various video decompression algorithms such as specified in MPEG-2, MPEG-4, AVC, VC1, VP6, H.264 and/or other video formats to form decompressed or decoded video content for the received right view video from the VTU 110.

The graphics processor 210 may comprise suitable logic, circuitry, interfaces and/or code that may be operable to receive left and/or right graphics information from the host processor 208 and/or the memory and playback module 216, for example, and may perform graphics processing. The graphics processor 210 may be operable to communicate graphics to and/or from the memory and playback module 216 during graphics processing. The graphics processor 210 may be operable to generate corresponding graphic objects for the left and right graphics streams. The generated left and right graphics streams may be communicated to the video and graphics blend module 230.

The memory and playback module 216 may comprise suitable logic, circuitry, interfaces and/or code that may be operable to store information such as executable instructions and data that may be utilized by the VRU 130. The executable instructions may comprise various image processing algorithms that may be utilized to process the decoded left and right video content by the decoder 204. The executable instructions may comprise graphics processing algorithms that may be utilized by the graphics processor 210 to generate left and right graphic objects. The stored data may comprise left and/or right decoded video content and/or left and/or right graphics information, for example. In this regard, the memory and playback module 216 may be utilized by the graphics processor 210 as a "scratch pad" when generating graphics frames. The memory and playback module 216 may comprise RAM, ROM, low latency nonvolatile memory such as flash memory and/or other suitable electronic data storage.

The local storage 218 may comprise suitable logic, circuitry, interfaces and/or code that may be operable to record and store contents of video applications and/or graphics programs and/or or data. The local storage 218 is an optional component for the VRU 130. The local storage 218 may comprise magneto- and/or optical drives such as a hard disk. The local storage 418 may also comprise solid state memory such as flash memory and/or other suitable electronic data storage capable of recording and storing data and instructions.

The video and graphics blending module 230 may comprise suitable logic circuitry, interfaces and/or code that may be operable to blend the left video stream and the left graphics and blend the right video stream with the right graphics. In this regard, the video and graphics blending module 230 may utilize a blending factor for the blending. In various embodiments of the invention, the blending factor may be determined based on how opaque or transparent the graphics should be. In other embodiments of the invention, the graphics may replace video and/or may be displayed when video data is not desired. The output of the video and graphics blending module 230 may be communicated to the left and right video and graphics compression module 232.

The left and right video and graphics compression module 232 may comprise suitable logic, circuitry, interfaces and/or code that may be operable to compress the blended left video and graphics content and compress the blended right video and graphics content prior to communicating left and right video streams via wireless transmission to the video display device 114. The left and right video and graphics compression module 232 may utilize lossless and/or visually lossless compression. In various embodiment of the invention, the left and right video and graphics compression module 232 may be operable to compress the left and right video streams in the horizontal direction only since the brain may be capable of combining or resolving left and right frames.

In operation, the decoder 204 may be operable to receive left and right view streams of 3D video data, for example. The left video stream and the right video stream may be decoded by the decoder 204 and may be stored in the memory and playback 216 module and/or the storage 218. The host processor 208 may generate and/or select left and/or right graphic information that may be stored in the memory and playback module 216 and/or the storage 218. The generated and/or selected left and/or right graphics information may be sent to the graphics processor 210 for processing. The graphics processor 210 may be operable to generate left and/or right graphics objects based on the received left and/or right graphics information. The left and/or right graphics objects may be referred to as left and/or right graphics streams.

The decoded left and/or right video streams and the generated left and/or right graphics objects may be communicated to the video and graphics blending module 230. The video and graphics blending module 230 may blend the decoded left video stream with the generated left graphics objects may blend the decoded right video stream with the generated right graphics objects. The left and/or right blended video and graphics streams may be communicated to the left and right video and graphics compression module 232 and may be compressed. The compressed left and/or right blended video and/or graphics streams may be communicated via wireless transmission by the wireless interface 150 of the VRU 130 to the wireless interface 160 of the video display device 114. The video display device 114 may be operable to decompress the left and/or right blended video and graphics streams and may display the left and/or right blended video and graphics content.

In instances when the video display device 114 may be an LCD display with a refresh rate of 240 Hz, for example, a frame rate of 60 Hz may be utilized when capturing and/or generating 3D video and/or graphics content, for example by a camera. In this manner, when separate left and right blended video and graphics content are communicated to the video display 114, for each captured 60 Hz video and/or graphics frame, four frames may be generated. For example, a left blended video and graphics frame, a black frame, a right blended video and graphics frame and another black frame may be generated. In this manner, a video display that may utilize 240 Hz for 2D video, may be operable to display the 60 Hz blended video and graphics content comprising four frames for each video and/or graphics capture instance at 240 Hz. LCD displays may have a slow response time. Also, LCD displays may be of a persistent type of display where pixels remain displayed on a screen until they are over written. As such, alternating the black frames with the 3D left frames and/or the 3D right frames may prevent simultaneous on screen display of left frame pixels and right frame pixels. With regard to bandwidth, additional bandwidth, relative to bandwidth utilized for 2D video, may not be necessary for wireless communication of the 3D video to an LCD display, even with additional on screen display (OSD) frames sent separately. With the presence of the black frames, the additional frame inserted for OSD frame may be a part of the bandwidth utilized for wireless communication to 2D and/or 3D displays.

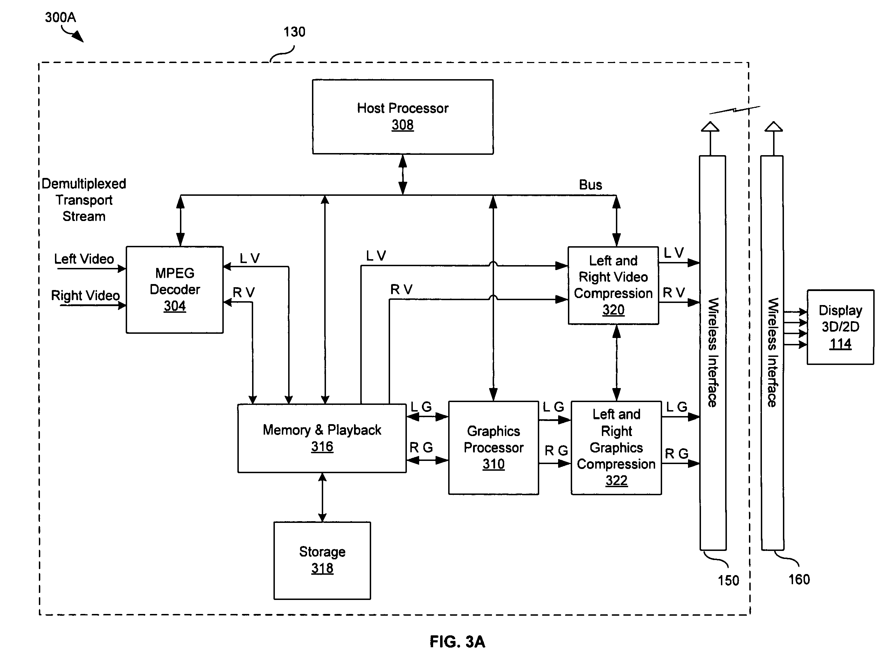

FIG. 3A is a block diagram that illustrates an exemplary video reception unit that may be operable to wirelessly transmit left and/or right 3D video streams and left and/or right graphics streams to a video display unit, in accordance with an embodiment of the invention. Referring to FIG. 3A, there is shown a video processing system 300A comprising the VRU 130 that may comprise a host processor 308, an decoder 304, a memory and playback module 316, a local storage 318, a graphics processor 310, a left and right video compression module 320, a left and right graphics compression module 322 and the wireless interfaces 150. In addition, there is shown the wireless interface 160 and the video display device 114.

The host processor 308 may comprise suitable logic, circuitry, interfaces and/or code that may be operable to control operations of various units within the VRU 130, for example, the decoder 304, the graphics processor 310 and/or the compression modules 320 and 322. The host processor 308 may support various applications, for example, 3D video streaming on the VRU 130. The host processor 308 may be operable to communicate with the memory and playback 316 and/or the local storage 318. The host processor 308 may be operable to generate left and/or right graphics information for graphics that may overlay, be blended with and/or replace the received left and/or right 3D video steam data, for example. Exemplary graphics may comprise a user interface, for example, a user guide and/or a menu or may comprise 3D graphics to overlay 3D video data. The left and/or right graphics information may be communicated to the memory and playback module 316 and/or to the graphics processor 310 for processing the graphics and for generating left and/or right graphics objects which may be referred to as left and right graphics streams. In this regard, the host processor 308 may be configured to select graphics for display in the 3D TV program.

The decoder 304 may comprise suitable logic, circuitry, interfaces and/or code that may be operable to decode a received left view video from the VTU 110 frame by frame. The decoder 304 may be operable to utilize various video decompression algorithms such as specified in MPEG-2, MPEG-4, AVC, VC1, VP6, H.264 and/or other video formats to form decompressed or decoded video content for the received left view video from the VTU 110. Information such as the scene information from left view decoding may be communicated to be used for right view decoding, for example. In addition, the decoder 304 may be operable to decode right view video from the VTU 110 frame by frame. The decoder 304 may be operable to utilize various video decompression algorithms such as specified in MPEG-2, MPEG-4, AVC, VC1, VP6, H.264 and/or other video formats to form decompressed or decoded video content for the received right view video from the VTU 110.

The graphics processor 310 may comprise suitable logic, circuitry, interfaces and/or code that may be operable to receive left and/or right graphics information from the host processor 308 and/or the memory and playback module 316, for example, and may perform graphics processing. The graphics processor 210 may be operable to communicate graphics to and/or from the memory and playback module 216 during graphics processing. The graphics processor 310 may be operable to generate corresponding graphic objects for the left and right graphics streams. The generated left and right graphics streams may be communicated to the left and right graphics compression module 322.

The memory and playback module 316 may comprise suitable logic, circuitry, interfaces and/or code that may be operable to store information such as executable instructions and data that may be utilized by the VRU 130. The executable instructions may comprise various image processing algorithms that may be utilized to process the decoded left and right video content by the decoder 304. The executable instructions may comprise graphics processing algorithms that may be utilized by the graphics processor 310 to generate left and right graphic objects. The stored data may comprise left and/or right decoded video content and/or left and/or right graphics information, for example. In this regard, the memory and playback module 216 may be utilized by the graphics processor 210 as a "scratch pad" when generating graphics frames. The memory and playback module 316 may comprise RAM, ROM, low latency nonvolatile memory such as flash memory and/or other suitable electronic data storage.

The local storage 318 may comprise suitable logic, circuitry, interfaces and/or code that may be operable to record and store contents of video applications and/or graphics programs and/or or data. The local storage 318 is an optional component for the VRU 130. The local storage 318 may comprise magneto- and/or optical drives such as a hard disk. The local storage 418 may also comprise solid state memory such as flash memory and/or other suitable electronic data storage capable of recording and storing data and instructions.

The left and right video compression module 320 may comprise suitable logic, circuitry, interfaces and/or code that may be operable to compress the left video content and compress the right video content prior to communicating left and right video streams via wireless transmission to the video display device 114.

The left and right graphics compression module 322 may comprise suitable logic, circuitry, interfaces and/or code that may be operable to compress the left graphics stream and compress the right graphics stream prior to communicating the left and right graphics streams via wireless transmission to the video display device 114.

The left and right video compression module 320 and/or the left and right graphics compression module 322 may utilize lossless and/or visually lossless compression. In various embodiment of the invention, the left and right video compression module 320 and/or the left and right graphics compression module 322 may be operable to compress the left and right video streams in the horizontal direction only. The human brain may be capable of combining or resolving left and right frames comprising missing pixels.

In another embodiment of the invention, a section of a frame, for example, a line, from a left video frame, a right video frame, a left graphics frame and/or a right graphics frame may be compressed and then wirelessly communicated to the video display device 114 by section instead of communicating an entire frame at once. In some cases, the sections of video and/or graphics frames may comprise several lines in order to enable effective compression capability, but the frame sections may be much smaller than a whole frame. Communicating in sections of frames rather than whole frames may reduce delay between reception of video information and graphics information and may thereby reduce buffering requirements and/or complexity of a wireless receiver.

In operation, the decoder 304 may be operable to receive left and right view streams of 3D video data, for example. The left video stream and the right video stream may be decoded by the decoder 304 and may be stored in the memory and playback 316 module and/or the storage 318. The host processor 308 may generate and/or select left and/or right graphic information that may be stored in the memory and playback module 316 and/or the storage 318. The generated and/or selected left and/or right graphics information may be sent to the graphics processor 310 for processing. The graphics processor 310 may be operable to generate left and/or right graphics objects based on the received left and/or right graphics information. The left and/or right graphics objects may be referred to as left and/or right graphics streams. The decoded left and/or right video streams may be received by the left and right video compression module 320 and may be compressed utilizing horizontal only compression techniques. Similarly, the left and/or right graphics streams may be received by the left and right graphics compression module 322 and may be compressed utilizing horizontal only compression techniques, for example. The compressed left and/or right video streams and/or the compressed left and/or right graphics streams may be communicated via wireless transmission by the wireless interface 150 of the VRU 130 to the wireless interface 160 of the video display device 114. The video display device 114 may be operable to decompress the left and/or right video streams and/or the left and/or right graphics streams and may blend the left graphics with the left video stream and the right graphics with the right video stream prior to displaying the blended video and graphics content.

In various embodiments of the invention, a transmission bandwidth may be doubled when sending separate left and right video streams and separate left and right graphic streams rather than sending left and right blended video and graphics content as described with respect to FIG. 2. However, by separating compression of the video and graphics content, the left and right video compression module 320 and/or the left and right graphics compression module 322 may be operable to utilize different kinds of compression techniques. In this regard, compression efficiency may be different for graphics and video content. Moreover, in various embodiments of the invention the video and/or graphics content may not be compressed prior to wireless communication to the video display device 114. For example, a frame rate for graphics content may be lowered so that uncompressed graphics content may be transmitted wirelessly to the video display device 114. In this regard, rather than utilizing two to one compression, uncompressed graphics may be communicated at half frame rate relative to the compressed graphics frame rate. As described with respect to FIG. 2, in instances when the video display device 114 is an LCD display and is also being used as a 2D display, for example, a 240 Hz display, additional bandwidth may not be required for sending the 3D graphics and video relative to sending 2D video information.

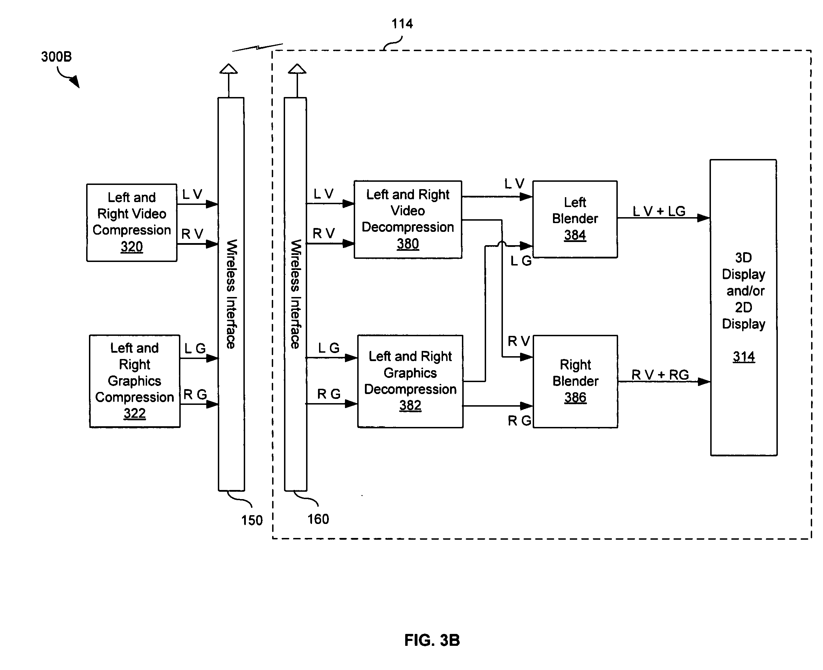

FIG. 3B is a block diagram that illustrates an exemplary display device that may be operable to wirelessly receive compressed left and right 3D video streams and process left and right graphics streams from a video reception unit, in accordance with an embodiment of the invention. Referring to FIG. 3B, there is shown there is shown a video processing system 300B comprising the video display device 114 that may comprise the wireless interface 160 the left and right video decompression module 380, the left and right graphics decompression module 382, the left blending module 384, the right blending module 386 and a 3D and/or 2D display 314. In addition, there is shown the wireless interface 150, the left and right video compression module 320 and the left and right graphics compression module.

The left and right video decompression module 380 may comprise suitable logic, circuitry, interfaces and/or code that may be operable to decompress the compressed left video stream and/or the compressed right video stream that are received by the video display device 114 via the wireless interface 160. The decompressed left video stream may be communicated to the left blending module 384 and the decompressed right video stream may be communicated to the right blending module 386.

The left and right graphics decompression module 382 may comprise suitable logic, circuitry, interfaces and/or code that may be operable to decompress the compressed left graphics stream and/or the compressed right graphics stream that are received by the video display device 114 via the wireless interface 160. The decompressed left graphics stream may be communicated to the left blending module 384 and the decompressed right graphics stream may be communicated to the right blending module 386.

The left blending module 384 may comprise suitable logic, circuitry, interfaces and/or code that may be operable to receive and blend the left video stream and the left video graphics. In this regard, the left blending module 384 may utilize a blending factor for the blending. In various embodiments of the invention, the video display device 114 may determine the blending factor based on how opaque or transparent the graphics should be. In other embodiments of the invention, the graphics may replace video and/or may be displayed when video data is not desired. The output of the left blending module 384 may be communicated to the 3D and/or 2D display 314.

The right blending module 386 may comprise suitable logic, circuitry, interfaces and/or code that may be operable to receive and blend the right video stream and the right video graphics. In this regard, the right blending module 386 may utilize a blending factor for blending left video and left graphics. In various embodiments of the invention, the video display device 114 may determine the blending factor based on how opaque or transparent the graphics should be. In other embodiments of the invention, the graphics may replace video and/or may be displayed when display of video data is not desired. The output of the right blending module 386 may be communicated to the 3D and/or 2D display 314. In various embodiment of the invention, the blended right and/or left video and graphics may be converted to 2D for display.

In operation, the video display device 114 may be operable to receive via wireless transmission a compressed left video stream, a compressed right video stream, a compressed left graphics stream and/or a compressed right graphics stream via the wireless interface 160. The left and right video decompression module 380 may be operable to receive the compressed left and right video streams and perform decompression of the video streams. The left and right graphics decompression module 382 may receive the left and right compressed graphics steams and may perform decompression on the received graphics streams. The decompressed left video stream from the left and right video decompression module 380 and the decompressed left graphics stream from the left and right graphics decompression module 382 may be sent to the left blending module 384. The left blending module 384 may blend the left graphics stream with the left video stream and may output the blended left video and graphics to the 3D and//or 2D display 314. Similarly, the decompressed right video stream from the left and right video decompression module 380 and the decompressed right graphics stream from the left and right graphics decompression module 382 may be sent to the right blending module 386. The right blending module 386 may blend the right graphics stream with the right video stream and may output the blended right video and graphics to the 3D and//or 2D display 314. The 3D and/or 2D display 314 may display the blended left graphics and video and/or the blended right graphics and video.

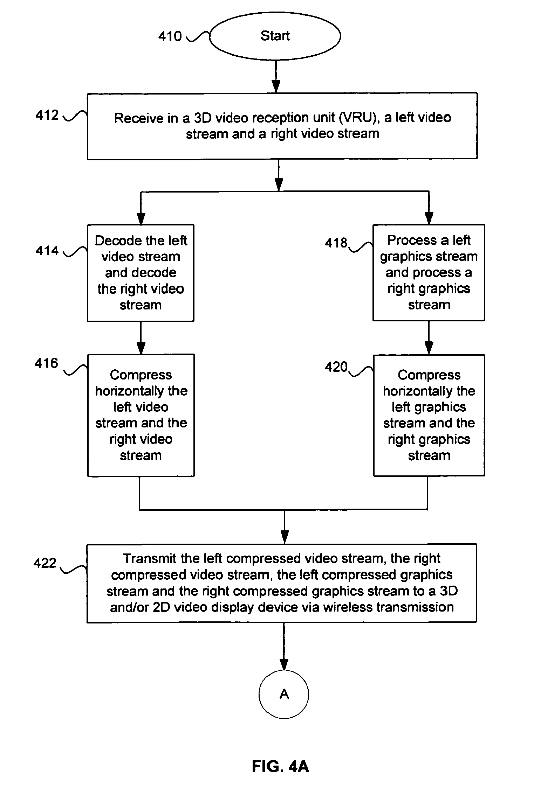

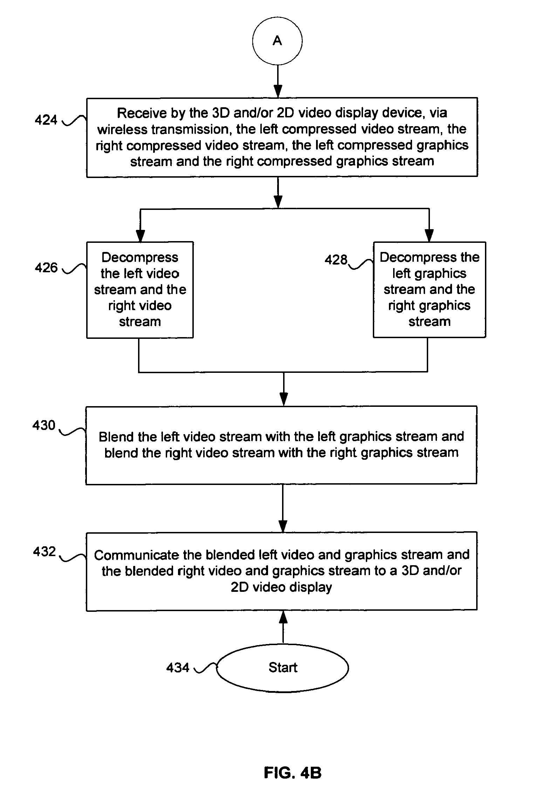

FIG. 4A is a flow chart illustrating exemplary steps for performing wireless transmission of 3D video and 3D graphics from a video reception unit to a video display device, in accordance with an embodiment of the invention. The exemplary steps may begin with step 410. In step 412, a 3D video reception unit (VRU) 130 may receive a left video stream and a right video stream. In step 414, the left video stream and the right video stream may be decoded by the decoder 304, for example. In step 416, the left video stream and the right video stream may be horizontally compressed by the left and right video compression unit 320. In step 418, the left and/or right graphics information that may be stored on the VRU 130 or that may be received with the left and/or right video stream, for example, may be processed by the graphics processor 310 to generate a left graphics stream and/or a right graphics stream. In step 420, the left graphics stream and/or the right graphics stream may be horizontally compressed by the left and right graphics compression unit 322. In step 422, the left compressed video stream, the right compressed video stream, the left compressed graphics stream and the right compressed graphics stream may be communicated to the 3D and/or 2D video display device 114 via wireless transmission by the wireless interface 150. The exemplary steps may continue in FIG. 4B.

FIG. 4B is a flow chart illustrating exemplary steps for wireless reception by a video display device of 3D video and 3D graphics from a video reception unit, in accordance with an embodiment of the invention. In step 424, the 3D and/or 2D video display device 114 may receive via wireless transmission by the wireless interface 160, the left compressed video stream, the right compressed video stream, the left compressed graphics stream and the right compressed graphics stream. In step 426, the left and right video decompression module 380 may decompress the left video stream and/or the right video stream. In step 428, the left and right graphics decompression module 382 may decompress the left graphics stream and the right graphics stream. In step 430, the left video stream and the left graphics stream may be blended based on a blending factor in the left blending module 384. In addition, the right video stream and the right graphics stream may be blended based on a blending factor in the right blending module 386. In step 432, the blended left video and graphics stream and the blended right video and graphics stream may be communicated to the 3D and/or 2D display 314. The exemplary steps may end at step 534.

In an embodiment of the invention, one or more processors and/or circuits in a first video processing device, for example, the VRU 130, may be operable to receive and/or decode left and right video streams. The left video stream, the right video stream, a left graphics stream and a right graphics stream may be communicated wirelessly to a second video processing device, for example, the video display device 114. In this regard, the first video processing device may comprise one or more of a set-top-box and a computer, for example. The second video processing device may comprise a 3D and/or 2D video display device, such as a television, for example. In various embodiments of the invention, prior to the wireless communication, the right video stream may be blended with the right graphic stream and/or the left video stream may be blended with the left graphic stream, for example, by the video and graphics blending module 230. The left video stream, the right video stream, the left graphics stream and the right graphics stream may be compressed prior to the wireless communication, for example, by the left and right video and graphics compression module 232 describe with respect to FIG. 2 or by the left and right video compression module 320 and the left and right graphics compression module 322 described with respect to FIG. 3A. In this regard, the left compressed video stream, the right compressed video stream, the left compressed graphics stream and the right compressed graphics stream may be communicated via a first wireless interface 150 of the first video processing device, VRU 130, and may be received by a corresponding second wireless interface 150 of a second video processing device which may comprise a 3D and/or 2D video display device, for example, the video display device 114.

The left graphics stream and the right graphics stream may be generated utilizing left and right graphics information. The left and right graphics information may be stored in the first video processing device, for example, the VRU 130, and/or may be received by the first video processing device, the VRU 130. The graphics processor 210 within the first video processing device may generate graphics objects for the left. graphics stream and the right graphics streams. In various embodiments of the invention, the left video stream, the right video stream, the left graphics stream, the right graphics stream, a blended the left video stream with the left graphics stream and/or a blended right video stream with the right graphics stream may be compressed utilizing lossless, visual lossless and/or lossy horizontal compression, for example, by the graphics compression module 232, the left and right video compression module 320 and/or the left and right graphics compression module 322.

The left and right video decompression module 380 and/or the left and right graphics decompression module 382 in the second video processing device may decompress the compressed left video stream, the compressed right video stream, the compressed left graphics stream, the compressed right graphics stream, the compressed blended left video stream with the left graphics stream and/or the compressed blended right video stream with the right graphics stream. The second video processing device may comprise a 3D and/or 2D video display. Furthermore, the left blending module 384 and/or the right blending module 386 in the second video processing device may blend the decompressed left video stream with the decompressed left graphics stream and/or may blend the decompressed right video stream with the decompressed right graphics stream. The second video processing device, for example, the video display device 114, may display a blended left video stream with left graphics stream and a blended right video stream with right graphics stream. In various embodiments of the invention, the left video stream, the right video stream, the left graphics stream and/or the right graphic stream may comprise uncompressed data.

In another embodiment of the invention, one or more processors and/or circuits in a first video processing device, for example, the VRU 130 may receive and/or decode left and right video streams. In addition, the left and the right graphics streams may be generated by the first video processing device, for example, the VRU 130. The left video stream, the right video stream, the left graphics stream and the right graphics stream may be compressed and may be wirelessly communicated to a second video processing device, for example, the video display device 114. In this regard, the first video processing device, VRU 130, may comprise one or more of a set-top-box and a computer, for example. The second video processing device, the video display device 114, may comprise a 3D and/or 2D video display device, such as a television, for example.

The left and the right graphics streams may be generated utilizing left and right graphics information that may be stored in the first video processing device, VRU 130, and/or may be received by the first video processing device, VRU 130. For example, a graphics processor 310 on the first video processing device, VRU 130, may generate graphics objects for the left and right graphics streams. The left video stream, the right video stream, the left graphics stream and the right graphics stream may be compressed utilizing horizontal only compression techniques, for example, by the left and right video compression module 320 and the left and right graphics compression module 322 respectively.

The second video processing device, the video display device 114, may receive the compressed left video stream, the compressed right video stream, the compressed left graphics stream and the compressed right graphics stream via a second wireless interface 160. Furthermore, the second video processing device, the video display device 114, may decompress the received streams comprising the left video stream, the right video stream, the left graphics stream and the right graphics stream within the left and right decompression module 380 and the left and right graphics decompression module 832 respectively. The second video processing device, the video display device 114, may blend the left video stream with left graphics stream within the left blending device 384, for example. Similarly, the second video processing device, the video display device 114, may blend the right video stream with the right graphics stream within the right blending device 386, for example. The second video processing device, the video display device 114, may display the blended left video stream and left graphics stream and may display the blended right video stream and the right graphics stream. In this manner, 3D video and 3D graphics may be communicated between the VRU 130, for example, a set-top-box and the video display device 114, for example, a television via wireless communication.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for communicating 3D video via a wireless communication link.

Accordingly, the present invention may be realized in hardware, software, or a combination of hardware and software. The present invention may be realized in a centralized fashion in at least one computer system or in a distributed fashion where different elements may be spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for processing video, the method comprising:
performing by one or more processors and/or circuits in a first video processing device:
decoding 3D video comprising a left video stream and a right video stream; and
wirelessly communicating said left video stream, said right video stream, a left graphics stream and a right graphic stream via a first wireless interface of said first video processing device.

2. The method according to claim 1, wherein said first video processing device comprises one or more of a set-top-box and a computer.

3. The method according to claim 1, comprising blending said right video stream with said right graphic stream and/or blending said left video stream with said left graphic stream prior to said wireless communication.

4. The method according to claim 1, comprising compressing said left video stream, said right video stream, said left graphics stream and said right graphics stream prior to said wirelessly communicating.

5. The method according to claim 4, wherein said wirelessly communicated left compressed video stream, said right compressed video stream, said left compressed graphics stream and said right compressed graphics stream are received by a corresponding second wireless interface of a second video processing device, and said second video processing device comprises a 3D and/or 2D video display device.

6. The method according to claim 1, comprising generating said left graphics stream and said right graphics stream utilizing left and right graphics information that is stored in said first video processing device and/or received by said first video processing device.

7. The method according to claim 1, comprising generating by a graphics processor within said first video processing device, graphics objects for said left graphics stream and said right graphics streams.

8. The method according to claim 1, comprising compressing said left video stream, said right video stream, said left graphics stream, said right graphics stream, a blended said left video stream with said left graphics stream and/or a blended right video stream with said right graphics stream utilizing lossless, visual lossless and/or lossy horizontal compression.

9. The method according to claim 1, wherein a second video processing device decompresses a compressed said left video stream, a compressed said right video stream, a compressed said left graphics stream, a compressed said right graphics stream, a compressed blended said left video stream with said left graphics stream and/or a compressed blended right video stream with said right graphics and said second video processing device comprises a 3D and/or 2D video display device.

10. The method according to claim 9, wherein said second video processing device blends said decompressed said left video stream with said decompressed said left graphics stream and/or blends said decompressed said right video stream with said decompressed said right graphics stream.

11. A system for processing video, the system comprising:
one or more processors and/or circuits in a first video processing device, wherein said one or more processors and/or circuits are operable to:
decode 3D video comprising a left video stream and a right video stream; and
wirelessly communicate said left video stream, said right video stream, a left graphics stream and a right graphic stream via a first wireless interface of said first video processing device.

12. The system according to claim 11, wherein said first video processing device comprises one or more of a set-top-box and a computer.

13. The system according to claim 11, wherein said one or more processors and/or circuits are operable to blend said right video stream with said right graphic stream and/or blend said left video stream with said left graphic stream prior to said wireless communication.

14. The system according to claim 11, wherein said one or more processors and/or circuits are operable to compress said left video stream, said right video stream, said left graphics stream and said right graphics stream prior to said wirelessly communicating.

15. The system according to claim 14, wherein said wirelessly communicated left compressed video stream, said right compressed video stream, said left compressed graphics stream and said right compressed graphics stream are received by a corresponding second wireless interface of a second video processing device, and said second video processing device comprises a 3D and/or 2D video display device.
